# EUROPEAN PATENT APPLICATION

(11) **EP 4 333 514 A1**
(43) Date of publication of application: **06.03.2024**
(21) Application number: 22794742.1
(22) Date of filing: 21.04.2022
(51) Int. Cl.: H04W 56/00, H04W 72/04, H04L 5/00

(54) **SYNCHRONIZATION RESOURCE CONFIGURATION METHOD AND APPARATUS, USER EQUIPMENT, AND STORAGE MEDIUM**

(30) Priority: 25.04.2021 CN 202110450474
(71) Applicant: Vivo Mobile Communication Co., Ltd., Dongguan, Guangdong 523863 (CN)
(72) Inventor: ZENG, Yu, Dongguan, Guangdong 523863 (CN); LIU, Siqi, Dongguan, Guangdong 523863 (CN); JI, Zichao, Dongguan, Guangdong 523863 (CN)
(74) Representative: Conti, Marco
(86) International application number: PCT/CN2022/088217
(87) International publication number: WO 2022/228271

(57) **Abstract**

This application discloses a synchronization resource configuration method and apparatus, user equipment, and a storage medium. The synchronization resource configuration method in embodiments of this application includes: determining, by UE, a target configuration parameter, where the target configuration parameter is used to transmit synchronization resources on at least two carriers, the target configuration parameter includes at least one of the following: target time information and target interval information, the target time information is used to indicate a target time, and the target interval information includes at least one of the following: an interval of a target time and an interval of a synchronization resource, where the target time includes at least a transmission time of a synchronization resource, and configuration parameters of the synchronization resources on the at least two carriers are at least partially the same.

## Description

### CROSS-REFERENCE TO RELATED APPLICATIONS

This application claims priority to Chinese Patent Application No. 202110450474.6, filed on April 25, 2021 in China, which is incorporated herein by reference in its entirety.

### TECHNICAL FIELD

This application pertains to the field of communication technologies, and specifically relates to a synchronization resource configuration method and apparatus, user equipment, and a storage medium.

### BACKGROUND

In a new radio (New Radio, NR) sidelink (Sidelink, SL) scenario, when a plurality of component carriers (Component Carrier, CC) perform carrier aggregation (Carrier Aggregation, CA), because subcarrier spacings (Sub-carrier Spacing, SCS) and transmission patterns (pattern) that are corresponding to different CCs may be different, locations of synchronization resources on the CCs are not aligned, and consequently time domain occupation of a synchronization signal is relatively high, and resource utilization is reduced. In addition, misalignment of the synchronization resources on the CCs also causes a transmission conflict between a synchronization signal and another signal, affecting reliability of a sidelink service.

### SUMMARY

Embodiments of this application provide a synchronization resource configuration method and apparatus, user equipment, and a storage medium, to resolve a problem that reliability of a sidelink service is affected because locations of synchronization resources on a plurality of CCs are not aligned.

According to a first aspect, a synchronization resource configuration method is provided. The synchronization resource configuration method includes: determining, by user equipment (User Equipment, UE), a target configuration parameter, where the target configuration parameter is used to transmit synchronization resources on at least two carriers, the target configuration parameter includes at least one of the following: target time information and target interval information, the target time information is used to indicate a target time, and the target interval information includes at least one of the following: an interval of a target time and an interval of a synchronization resource, where the target time includes at least a transmission time of a synchronization resource, and configuration parameters of the synchronization resources on the at least two carriers are at least partially the same.

According to a second aspect, a synchronization resource configuration apparatus is provided. The synchronization resource configuration apparatus includes a determining module, where the determining module is configured to determine a target configuration parameter, where the target configuration parameter is used to transmit synchronization resources on at least two carriers, the target configuration parameter includes at least one of the following: target time information and target interval information, the target time information is used to indicate a target time, and the target interval information includes at least one of the following: an interval of a target time and an interval of a synchronization resource, where the target time includes at least a time of transmitting a synchronization resource, and configuration parameters of the synchronization resources on the at least two carriers are at least partially the same.

According to a third aspect, LTE is provided. The LTE includes a processor, a memory, and a program or an instruction that is stored in the memory and that can be run on the processor, where the program or the instruction is executed by the processor to implement the steps of the method in the first aspect.

According to a fourth aspect, LTE is provided, including a processor and a communication interface, where the processor is configured to determine a target configuration parameter, where the target configuration parameter is used to transmit synchronization resources on at least two carriers, the target configuration parameter includes at least one of the following: target time information and target interval information, the target time information is used to indicate a target time, and the target interval information includes at least one of the following: an interval of a target time and an interval of a synchronization resource, where the target time includes at least a time of transmitting a synchronization resource, and configuration parameters of the synchronization resources on the at least two carriers are at least partially the same.

According to a fifth aspect, a readable storage medium is provided. The readable storage medium stores a program or an instruction, and the program or the instruction is executed by a processor to implement the steps of the method in the first aspect.

According to a sixth aspect, a chip is provided. The chip includes a processor and a communication interface, where the communication interface is coupled to the processor, and the processor is configured to run a program or an instruction to perform the method in the first aspect.

According to a seventh aspect, a computer program/program product is provided. The computer program/program product is stored in a non-transient storage medium, and the program/program product is executed by at least one processor to implement the steps of the synchronization resource configuration method in the first aspect.

In the embodiments of this application, LTE may determine a target configuration parameter, to transmit synchronization resources on at least two carriers, where the target configuration parameter includes target time information and/or target interval information, and configuration parameters of the synchronization resources on the at least two carriers are at least partially the same. In this scheme, when a plurality of component carriers perform carrier aggregation, the LTE may determine a target time for transmitting a synchronization resource on each carrier, an interval of a target time, and/or an interval of a synchronization resource on each carrier, where configuration parameters of synchronization resources on these determined carriers are partially the same or totally the same. Therefore, synchronization resources on the component carriers may be aligned, so that problems of relatively high time domain occupation of a synchronization resource and a transmission conflict between a synchronization signal and another signal are avoided, thereby improving resource utilization and ensuring reliability of a sidelink service.

### BRIEF DESCRIPTION OF DRAWINGS

FIG. 1 is a schematic architecture diagram of a communication system according to an embodiment of this application;
FIG. 2 is a schematic diagram of a synchronization resource configuration method according to an embodiment of this application;
FIG. 3 is a first schematic diagram of an instance of a synchronization resource according to an embodiment of this application;
FIG. 4 is a second schematic diagram of an instance of a synchronization resource according to an embodiment of this application;
FIG. 5 is a third schematic diagram of an instance of a synchronization resource according to an embodiment of this application;
FIG. 6 is a fourth schematic diagram of an instance of a synchronization resource according to an embodiment of this application;
FIG. 7 is a fifth schematic diagram of an instance of a synchronization resource according to an embodiment of this application;
FIG. 8 is a sixth schematic diagram of an instance of a synchronization resource according to an embodiment of this application;
FIG. 9 is a seventh schematic diagram of an example of a synchronization resource according to an embodiment of this application;
FIG. 10 is a schematic structural diagram of a synchronization resource configuration apparatus according to an embodiment of this application;
FIG. 11 is a schematic structural diagram of hardware of a communication device according to an embodiment of this application; and
FIG. 12 is a schematic structural diagram of hardware of LTE according to an embodiment of this application.

### DESCRIPTION OF EMBODIMENTS

The following clearly describes the technical schemes in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

In the specification and claims of this application, the terms "first", "second", and the like are intended to distinguish between similar objects but do not describe a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-advanced, LTE-A) system, and can also be used in other wireless communications systems such as Code Division Multiple Access (Code Division Multiple Access, CDMA), Time Division Multiple Access (time division multiple access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-Carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a 6^{th} generation (6th Generation, 6G) communications system.

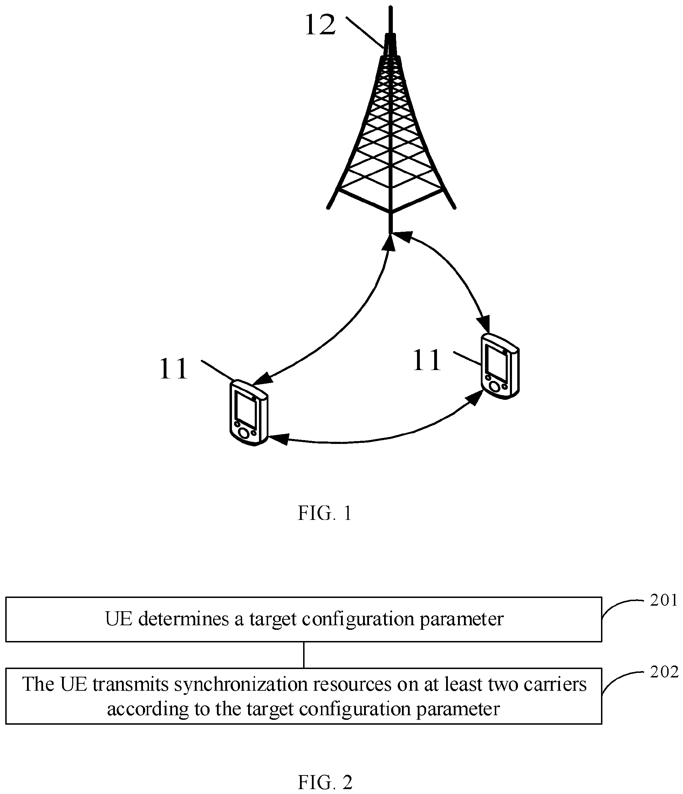

FIG. 1 is a schematic architecture diagram of a wireless communications system to which embodiments of this application can be applied. The wireless communication system includes UE 11 and a network side device 12. The UE 11 may also be referred to as a terminal device or a terminal. The UE 11 may be a terminal side device such as a mobile phone, a tablet computer (tablet computer), a laptop computer (laptop computer) or a notebook computer, a personal digital assistant (Personal Digital Assistant, PDA), a palmtop computer, a netbook, an ultra-mobile personal computer (Ultra-Mobile Personal Computer, UMPC), a mobile internet device (MOBILE INTERNET DEVICE, MID), a wearable device (wearable device), vehicle user equipment (VUE), or pedestrian user equipment (PUE). The wearable device includes a smartwatch, a bracelet, a headset, glasses, and the like. It should be noted that a specific type of the UE 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

The following describes some concepts and/or terms in a synchronization resource configuration method and apparatus, user equipment, and a storage medium provided in the embodiments of this application.

### 1. Carrier aggregation (CA)

Carrier aggregation is aggregation of two or more component carriers (CC) to support a larger transmission bandwidth (for example, 100 MHz at most). Actually, each component carrier corresponds to one independent cell, and generally, one component carrier may be equivalent to one cell. A maximum bandwidth of each component carrier is 20 MHz. Carrier aggregation supports aggregation between different component carriers: component carriers of a same bandwidth or different bandwidths, adjacent or non-adjacent component carriers within a same frequency band, and component carriers within different frequency bands.

### 2. Sidelink (sidelink)

The sidelink may also be referred to as a secondary link, a side link, or an edge link, and is used for direct data transmission between UEs without a network side device.

The LTE sends sidelink control information (Sidelink Control Information, SCI) through a physical sidelink control channel (Physical Sidelink Control Channel, PSCCH), and schedules transmission of a physical sidelink shared channel (Physical Sidelink Shared Channel, PSSCH) to send data. The transmission is performed in a broadcast manner, and a receive end does not feed back, to a transmit end, whether the reception is successful.

An LTE sidelink supports two resource allocation modes: a scheduled resource allocation (scheduled resource allocation) mode and an autonomous resource selection (autonomous resource selection) mode. In the former mode, the network side device controls and allocates a resource to each UE, and in the latter mode, a resource is autonomously selected by the UE.

LTE supports sidelink carrier aggregation. A CA and a Uu interface (that is, a downlink and an uplink) of the LTE sidelink are different, and there is no division between a primary component carrier (Primary component carrier, PCC) and a secondary component carrier (Secondary component carrier, SCC). The LTE in the autonomous resource selection mode autonomously performs resource sensing (sensing) and resource reservation on each CC.

The LTE sidelink is designed for specific public safety matters (for example emergency communication at disaster sites such as fires or earthquakes), vehicle to everything (vehicle to everything, V2X) communication, and the like. The vehicle to everything communication includes various services, such as basic security communication, advanced (automatic) driving, formation, and sensor extension. Since the LTE sidelink only supports broadcast communication, the LTE sidelink is mainly used for basic security communication, and other advanced V2X services are supported through an NR sidelink.

A 5G NR system may be applied to an operating frequency band above 6 GHz that is not supported by LTE, and supports a larger operating bandwidth. The NR system also supports sidelink interface communication for direct communication between terminals.

The current sidelink transmission mainly includes three transmission forms: unicast, multicast, and broadcast. The unicast is one-to-one (one to one) transmission, and the multicast is one-to-many (one to many) transmission. The broadcast is also one-to-many transmission, but the broadcast does not have a concept that the LTE belongs to a same group.

A PSCCH on a sidelink carries SCI, and the SCI is used to schedule a PSSCH. The SCI may indicate transmission resources and reserve these resources for subsequent transmission. A physical sidelink feedback channel (Physical Sidelink Feedback Channel, PSFCH) is used to feed back sidelink hybrid automatic repeat request-acknowledgment (Hybrid Automatic Repeat Request-Acknowledgment, HARQ-ACK) information. After determining the sidelink HARQ information, the UE may further send the sidelink HARQ information to a base station through a PUCCH or a PUSCH.

With reference to the accompanying drawings, the following describes in detail a synchronization resource configuration method provided in the embodiments of this application by using some embodiments and application scenarios thereof.

The embodiments of this application may be applied to a sidelink carrier aggregation scenario. In a manner of configuring a specific synchronization parameter, performing grouping processing on S-SSBs, introducing an interval parameter, and the like, when a plurality of CCs perform CA, synchronization resources on the CCs can be aligned, so that problems of relatively high time domain occupation of a synchronization resource (that is, low resource utilization) and a transmission conflict between a synchronization signal and another signal are avoided, thereby improving resource utilization and ensuring reliability of a sidelink service.

An embodiment of this application provides a synchronization resource configuration method. FIG. 2 is a flowchart of a synchronization resource configuration method according to an embodiment of this application. As shown in FIG. 2, the synchronization resource configuration method provided in this embodiment of this application may include the following step 201 and step 202.

Step 201: UE determines a target configuration parameter.

Step 202: The UE transmits synchronization resources on at least two carriers according to the target configuration parameter.

In this embodiment of this application, the target configuration parameter is used to transmit the synchronization resource on the at least two carriers, and the target configuration parameter includes at least one of the following: target time information and target interval information, where the target time information is used to indicate a target time, and the target interval information includes at least one of the following: an interval of a target time and an interval of a synchronization resource, where the target time includes at least a transmission time of a synchronization resource, and configuration parameters of the synchronization resources on the at least two carriers are at least partially the same.

In this embodiment of this application, the target time may be understood as a time that may be used to transmit the synchronization resources on the at least two carriers. The transmitting synchronization resources on at least two carriers may be understood as: sending the synchronization resources on the at least two carriers, or receiving the synchronization resources on the at least two carriers.

That configuration parameters of the synchronization resources on the at least two carriers are at least partially the same may be understood as: for the synchronization resources on the at least two carriers, the configuration parameters of the synchronization resources on these carriers are partially the same or totally the same.

For example, it is assumed that the at least two carriers are a carrier 1, a carrier 2, and a carrier 3, and the configuration parameters include a location, a length, and an SCS. That the configuration parameters of the synchronization resources on these carriers (that is, the carrier 1, the carrier 2, and the carrier 3) are at least partially the same is: a location of a synchronization resource on the carrier 1, a location of a synchronization resource on the carrier 2, and a location of a synchronization resource on the carrier 3 are the same, a length of the synchronization resource on the carrier 1, a length of the synchronization resource on the carrier 2, and a length of the synchronization resource on the carrier 3 are the same, and an SCS of the synchronization resource on the carrier 1, an SCS of the synchronization resource on the carrier 2, and an SCS of the synchronization resource on the carrier 3 are the same; or a location of a synchronization resource on the carrier 1, a location of a synchronization resource on the carrier 2, and a location of a synchronization resource on the carrier 3 are the same, a length of the synchronization resource on the carrier 1, a length of the synchronization resource on the carrier 2, and a length of the synchronization resource on the carrier 3 are the same, and an SCS of the synchronization resource on the carrier 1, an SCS of the synchronization resource on the carrier 2, and an SCS of the synchronization resource on the carrier 3 are different. Only these two cases are enumerated herein to describe that the configuration parameters of the synchronization resources on the carriers are at least partially the same, and other cases are further included, which are not enumerated one by one herein.

Optionally, in this embodiment of this application, the synchronization resource may be a sidelink-synchronization signal block (Sidelink-Synchronization Signal Block, S-SSB) or an S-SSB group.

It should be noted that the S-SSB group is: at least one S-SSB in a specific time constitutes one S-SSB group. S-SSBs within the S-SSB group may be continuous or discontinuous in time domain.

Optionally, in this embodiment of this application, the target configuration parameter is determined by any one of the following: a first time, a configuration of a network side device, a preconfiguration, an indication of other user equipment, and autonomous determining by the LTE. The first time is a time range in which the synchronization resources on the at least two carriers are located (or a length of the synchronization resources on the at least two carriers).

Optionally, in this embodiment of this application, a resource within the first time does not belong to a resource pool; or a resource within the first time is not used to transmit a specific channel/specific signal/specific signaling.

Optionally, in this embodiment of this application, a resource within the target time does not belong to a resource pool; or a resource within the target time is not used to transmit a specific channel/specific signal/specific signaling.

It should be noted that, that a resource within the first time does not belong to a resource pool may be understood as: the resource within the first time is excluded when the resource pool is determined, or the first time does not belong to the resource pool; and that a resource within the target time does not belong to a resource pool may be understood as: the resource within the target time is excluded when the resource pool is determined, or the target time does not belong to the resource pool.

Optionally, in this embodiment of this application, a resource that does not fall within the first time but falls within the target time is excluded when the resource pool is determined.

Optionally, in this embodiment of this application, the specific channel/specific signal/specific signaling may include at least one of the following: a PSCCH, a PSSCH, a PSFCH, SCI, or a reference signal (Reference Signal, RS).

Optionally, in this embodiment of this application, the target time information includes at least one of the following: a length of the target time, a start point of the target time, an end point of the target time, and an SCS of the target time.

Optionally, in this embodiment of this application, the length of the target time is any one of the following: a length of a first time on a first carrier, a length of a first time on a second carrier, and a preset length, where the first carrier is a carrier selected by the UE from the at least two carriers, the second carrier is a carrier with a longest length of a first time in all carriers, and the first time is a time range in which the synchronization resources on the at least two carriers are located.

Optionally, in this embodiment of this application, the first carrier is determined by at least one of the following: an SCS of a carrier, a priority of a carrier, a synchronization priority order (synchronization priority order) of a carrier, a synchronization reference of a carrier, a sidelink-synchronization signal (Sidelink-Synchronization Signal, SLSS) identifier of a carrier, a duplex pattern of a carrier, the number of synchronization resources of a carrier, the number of S-SSBs of a carrier, a frequency of a carrier, a frequency band/frequency range of a carrier, an absolute radio frequency channel number (Absolute Radio Frequency Channel Number, ARFCN) of a carrier, a global synchronization channel number (Global Synchronization Channel Number, GSCN) of a carrier, a coverage state corresponding to a carrier, whether a base station/global navigation satellite system (Global Navigation Satellite System, GNSS) is detected on a carrier, and an index (index) of a carrier.

Optionally, in this embodiment of this application, the first carrier is any one of the following: a carrier with a maximum SCS, a carrier with a minimum SCS, and a carrier with a specific SCS.

Optionally, in this embodiment of this application, the first carrier is any one of the following: a carrier with a highest priority during carrier selection, a carrier with a lowest priority during carrier selection, a carrier with a specific priority, a carrier with a highest priority during synchronization reference selection, and a carrier with a lowest priority during synchronization reference selection.

Optionally, in this embodiment of this application, the first carrier is any one of the following: a carrier whose synchronization priority order is a base station, and a carrier whose synchronization priority order is a GNSS.

It should be noted that the base station herein is a gNB or an eNB.

Optionally, in this embodiment of this application, the first carrier is any one of the following: a carrier whose synchronization reference is a base station, a carrier whose synchronization reference is a GNSS, and a carrier whose synchronization reference is synchronization reference user equipment (SyncRef UE).

It should be noted that the base station herein is a gNB or an eNB.

Optionally, in this embodiment of this application, the first carrier is any one of the following: a carrier with a minimum SLSS identifier and a carrier with a specific SLSS identifier.

For example, the specific SLSS identifier (SLSS ID) is 0, 1, 336, or 337.

Optionally, in this embodiment of this application, the first carrier is any one of the following: a carrier whose duplex pattern is time division duplex (Time Division Duplexing, TDD), a carrier for which a TDD configuration has been obtained, a carrier within an unpaired band (unpaired band), a carrier whose duplex pattern is frequency division duplex (Frequency Division Duplexing, FDD), a carrier for which a TDD configuration is not obtained, and a carrier within a paired band (paired band).

Optionally, in this embodiment of this application, the carrier corresponds to a specific TDD configuration (config) or a TDD pattern (pattern).

Optionally, in this embodiment of this application, the first carrier is a carrier with the specific number of synchronization resources.

For example, the specific number of synchronization resources is 1, 2, or 3.

Optionally, in this embodiment of this application, the first carrier is any one of the following: a carrier with the minimum number of S-SSBs within one synchronization cycle, a carrier with the maximum number of S-SSBs within one synchronization cycle, and a carrier with the specific number of S-SSBs within one synchronization cycle.

Optionally, in this embodiment of this application, the first carrier is any one of the following: a carrier with a lowest frequency (frequency), a carrier with a highest frequency, and a carrier with a specific frequency.

Optionally, in this embodiment of this application, the specific frequency is any one of the following: a point A, a center frequency/a boundary frequency of an S-SSB, a center frequency/a boundary frequency of a bandwidth part (Bandwidth Part, BWP), and a center frequency/a boundary frequency of a resource pool.

Optionally, in this embodiment of this application, the first carrier is any one of the following: a carrier with a lowest frequency band (frequency band)/frequency range (frequency range), a carrier with a highest frequency band/frequency range, a carrier with a minimum frequency band/frequency range, a carrier with a maximum frequency band/frequency range, and a carrier with a specific frequency band/frequency range.

Optionally, in this embodiment of this application, the first carrier is any one of the following: a carrier with a minimum ARFCN, a carrier with a maximum ARFCN, and a carrier with a specific ARFCN.

Optionally, in this embodiment of this application, the first carrier is any one of the following: a carrier with a minimum GSCN, a carrier with a maximum GSCN, and a carrier with a specific GSCN.

Optionally, in this embodiment of this application, the first carrier is any one of the following: a carrier within in-coverage and a carrier outside in-coverage.

Optionally, in this embodiment of this application, the first carrier is any one of the following: a carrier on which a base station is detected (for example, a base station providing a sidelink service can be detected) and a carrier on which a GNSS is detected (for example, a carrier of a reliable GNSS can be detected).

Optionally, in this embodiment of this application, the first carrier is any one of the following: a carrier with a minimum index, a carrier with a maximum index, and a carrier with a specific index.

Optionally, in this embodiment of this application, the first carrier may be specifically a reference carrier (reference carrier), a synchronization carrier (synchronization carrier), and a primary component carrier (PCC).

Optionally, in this embodiment of this application, the LTE may obtain the foregoing specific SCS/specific priority/specific SLSS ID/specific TDD configuration/TDD pattern/specific number of synchronization resources/specific number of S-SSBs/specific frequency/specific frequency band/frequency range/specific ARFCN/specific index or the like according to a configuration of a network side device, a preconfiguration, an indication of other user equipment, and autonomous determining by the UE.

It should be noted that the UE selects only one carrier as the first carrier. If a plurality of carriers simultaneously meet the foregoing selection condition of the first carrier, it depends on implementation of the LTE. For example, the LTE randomly selects one carrier from the plurality of carriers as the first carrier.

Optionally, in this embodiment of this application, the start point of the target time includes a start point of a target time on a first carrier and a start point of a target time on another carrier, the start point of the target time on the another carrier is obtained by using a first distance, the first distance is a distance between the start point of the target time on the another carrier and a first location, the first distance is determined by using a second distance, and the second distance is a distance between the start point of the target time on the first carrier and the first location, where the first location is any one of the following: a location of a direct frame number 0 (Direct Frame Number, DFN0)/a system frame number 0 (System Frame Number, SFNO) on a carrier, a start point of a synchronization cycle on a carrier, and an end point of a synchronization cycle on a carrier.

Optionally, in this embodiment of this application, for the start point of the target time, the LTE may obtain a distance (that is, the second distance, which may be referred to as offsetstart₁) between the first location on the first carrier (that is, a location of a DFNO on the first carrier/a location of an SFNO/a start point of a synchronization cycle/an end point of a synchronization cycle) and the start point of the target time on the first carrier according to a configuration of a network side device, a preconfiguration, an indication of other user equipment, and autonomous determining by the UE, and calculate a distance (that is, the first distance, which may be referred to as offsetstartᵢ) between the first location on the another carrier (that is, a location of a DFNO on the another carrier/a location of an SFNO/a start point of a synchronization cycle/an end point of a synchronization cycle) and the start point of the target time on the another carrier according to offsetstart₁ , where offsetstartᵢ =offsetstart₁ * 2^{ui}/2^{u1} ; and u₁ is a subcarrier spacing factor corresponding to the first carrier, and uᵢ is a subcarrier spacing factor corresponding to a carrier i.

It should be noted that absolute lengths of offsets of carriers are equal in time domain. However, because SCSs of the carriers may be different, specific values of the offsets may be different.

Optionally, in this embodiment of this application, offsetstart₁ is equal to a distance between the first location on the first carrier and the start point of the first time on the first carrier.

Optionally, in this embodiment of this application, the end point of the target time includes an end point of a target time on a first carrier and an end point of a target time on another carrier, the end point of the target time on the another carrier is obtained by using a third distance, the third distance is a distance between the end point of the target time on the another carrier and a first location, the third distance is determined by using a fourth distance, and the fourth distance is a distance between the end point of the target time on the first carrier and the first location.

Optionally, in this embodiment of this application, for the end point of the target time, the LTE may obtain a distance (that is, the fourth distance, which may be referred to as offsetend₁) between the first location on the first carrier (that is, a location of a DFNO on the first carrier/a location of an SFNO/a start point of a synchronization cycle/an end point of a synchronization cycle) and the end point of the target time on the first carrier according to a configuration of a network side device, a preconfiguration, an indication of other user equipment, and autonomous determining by the UE, and calculate a distance (that is, the third distance, which may be referred to as offsetendᵢ) between the first location on the another carrier (that is, a location of a DFNO on the another carrier/a location of an SFNO/a start point of a synchronization cycle/an end point of a synchronization cycle) and the end point of the target time on the another carrier according to offsetend₁, where offsetendᵢ=offsetend₁ * 2^{ui}/2^{u1}; and u₁ is a subcarrier spacing factor corresponding to the first carrier, and uᵢ is a subcarrier spacing factor corresponding to a carrier i.

It should be noted that absolute lengths of offsets of carriers are equal in time domain. However, because SCSs of the carriers may be different, specific values of the offsets may be different.

Optionally, in this embodiment of this application, offsetend₁ is equal to a distance between the first location on the first carrier and the end point of the first time on the first carrier.

Optionally, in this embodiment of this application, the SCS of the target time meets any one of the following: being the same as an SCS of a first time on a first carrier, an SCS of a target time on each carrier is the same as an SCS of a first time on the respective carrier, being the same as a maximum SCS of all carriers, being the same as a maximum SCS of all carriers, and being a preset SCS.

It can be understood that the SCS of the target time on each carrier is the same as the SCS of the first time on the first carrier; or the SCS of the target time on each carrier is the same as the SCS of the first time on the respective carrier, for example, an SCS of a target time on a carrier 1 is the same as an SCS of a first time on the carrier 1, and an SCS of a target time on a carrier 2 is the same as an SCS of a first time on the carrier 2; or the SCS of the target time on each carrier is the same as the maximum SCS of all the carriers; or the SCS of the target time on each carrier is the same as the minimum SCS of all the carriers; or the SCS of the target time on each carrier is the preset value.

Optionally, in this embodiment of this application, the target interval information is determined by at least one of the following: specific interval information, group information of a synchronization resource, common interval information, reference interval information, and an SCS of a carrier.

Optionally, in this embodiment of this application, the specific interval information includes at least one of the following:
only one S-SSB is transmitted within a transmission cycle;
the number of S-SSBs within each synchronization resource is 1;
there is only one target time within a transmission cycle;
the interval of the target time does not exist;
an interval of an S-SSB group does not exist;
an interval of an S-SSB within an S-SSB group does not exist; and
the number of S-SSB groups is 1.

It should be noted that, that the interval (that is, interval, for example, an interval 1, an interval 2, and an interval 3 described in the following embodiments) does not exist in this embodiment of this application may be understood as: when there is only one target time or only one S-SSB/S-SSB group within one cycle, there is no concept of "interval". Therefore, the interval may also be configured as a specified value, for example, the interval is 0.

It can be understood that through a configuration of a network side device, a preconfiguration, an indication of other user equipment, and autonomous determining by the UE, the UE may enable that only one S-SSB is transmitted within one cycle on a carrier on which a synchronization signal is transmitted, and/or the number of S-SSBs within each synchronization resource is 1, and/or there is only one target time within a cycle, and/or the interval of the target time (which may be referred to as an interval 1) does not exist, and/or an interval of an S-SSB group (which may be referred to as an interval 2) does not exist, and/or an interval of an S-SSB within an S-SSB group (which may be referred to as an interval 3) does not exist, and/or the number of S-SSB groups (syncgroupnum) is 1.

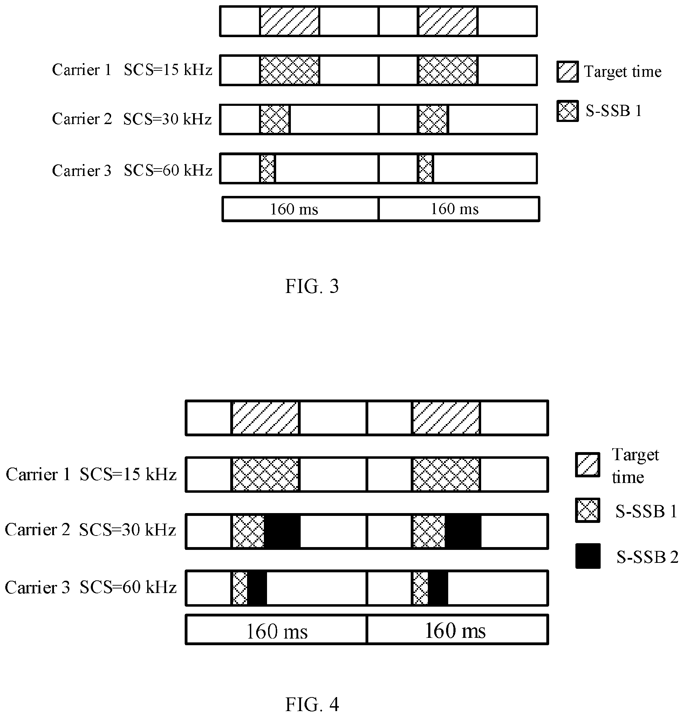

For example, as shown in FIG. 3, a carrier 1, a carrier 2, and a carrier 3 perform CA. It is assumed that a synchronization cycle is 160 ms, an SCS of the carrier 1 is 15 kHz, an SCS of the carrier 2 is 30 kHz, an SCS of the carrier 3 is 60 kHz, and the number of S-SSBs transmitted in a synchronization cycle of each carrier is configured as 1. The UE sets the length of the target time to be the longest first time on each carrier. In this case, an interval 1, an interval 2, and an interval 3 on each carrier do not exist, and the number of S-SSB groups within each synchronization cycle of each carrier is 1.

Optionally, in this embodiment of this application, in a first case, the target interval information meets at least one of the following:
the interval of the target time does not exist;
an interval of an S-SSB group does not exist; and
an interval of an S-SSB within an S-SSB group meets: an interval of an S-SSB within an S-SSB group on a carrier on which one S-SSB is transmitted within one cycle does not exist, or an interval of an S-SSB within an S-SSB group on a carrier on which a plurality of S-SSBs are transmitted within one cycle is 0 (that is, an S-SSB within one cycle is configured in continuous slots).

The first case meets: the group information of the synchronization resource is used to indicate that when a plurality of S-SSBs are transmitted on the at least two carriers within one cycle, the number of S-SSB groups transmitted on each carrier within one cycle is configured as 1.

It can be understood that in this manner, when a plurality of S-SSBs are transmitted on the at least two carriers within one cycle, the LTE sets the number of S-SSB groups transmitted on each carrier within one cycle to 1. In this case, the target interval information meets at least one of the foregoing.

For example, as shown in FIG. 4, a carrier 1, a carrier 2, and a carrier 3 perform CA. It is assumed that a synchronization cycle is 160 ms, an SCS of the carrier 1 is 15 kHz, an SCS of the carrier 2 is 30 kHz, an SCS of the carrier 3 is 60 kHz, and the numbers of S-SSBs transmitted on the carrier 1, the carrier 2, and the carrier 3 within the synchronization cycle are respectively configured as 1, 2, and 2. The UE sets the length of the target time to be the longest first time on each carrier. In this case, an interval 1 on each carrier does not exist, an interval 2 on each carrier does not exist, an interval 3 on the carrier 1 does not exist, an interval 3 on the carrier 2 and the carrier 3 is 0, and the number of S-SSB groups on each carrier within each synchronization cycle is 1.

Optionally, in this embodiment of this application, in a second case, the target interval information meets at least one of the following:
the interval of the target time meets: if there is a carrier on which only one S-SSB is transmitted within one cycle in the at least two carriers, the interval of the target time does not exist; or if there is no carrier on which only one S-SSB is transmitted within one cycle, the interval of the target time is configured by a network side device, preconfigured, predefined, autonomously determined by the UE, or indicated by other UE;
an interval of an S-SSB group meets: if there is a carrier on which only one S-SSB is transmitted within one cycle in the at least two carriers, the interval of the S-SSB group does not exist; or if there is no carrier on which only one S-SSB is transmitted within one cycle, the interval of the S-SSB group is the same as the interval of the target time (that is, interval 2=interval 1);
an interval of an S-SSB within an S-SSB group meets: if there is a carrier on which only one S-SSB is transmitted within one cycle in the at least two carriers, an interval of an S-SSB within an S-SSB group on a carrier on which only one S-SSB is transmitted within one cycle does not exist, or an interval of an S-SSB within an S-SSB group on a carrier on which a plurality of S-SSBs are transmitted within one cycle is 0; or if there is no carrier on which only one S-SSB is transmitted within one cycle, an interval of an S-SSB within an S-SSB group on each carrier is 0 (that is, an S-SSB within one S-SSB group is configured in continuous slots); and
the number of S-SSBs within an S-SSB group meets: the number of S-SSBs included in each S-SSB group on any carrier (for example, a carrier i) is a ratio of the number of S-SSBs transmitted on the any carrier within one cycle to the number of S-SSB groups, where
the second case meets: the group information of the synchronization resource is used to indicate that when a plurality of S-SSBs are transmitted on the at least two carriers within one cycle, the number of S-SSB groups transmitted on each carrier within one cycle is configured as a first value, the first value is the number of S-SSBs transmitted on a third carrier within one cycle, and the third carrier is a carrier with the minimum number of S-SSBs transmitted within one cycle.

Optionally, in this embodiment of this application, in a second case, the target interval information meets at least one of the following:
the interval of the target time meets: if only one S-SSB is transmitted on a specified carrier within one cycle in the at least two carriers, the interval of the target time does not exist; or if a plurality of S-SSBs are transmitted on each carrier within one cycle in the at least two carriers, the interval of the target time is configured by a network side device, preconfigured, predefined, autonomously determined by the UE, or indicated by other UE;
an interval of an S-SSB group meets: if only one S-SSB is transmitted on a specified carrier within one cycle in the at least two carriers, the interval of the S-SSB group does not exist; or if a plurality of S-SSBs are transmitted on each carrier within one cycle in the at least two carriers, the interval of the S-SSB group is the same as the interval of the target time;
an interval of an S-SSB within an S-SSB group meets: if only one S-SSB is transmitted on a specified carrier within one cycle in the at least two carriers, an interval of an S-SSB within an S-SSB group on a carrier on which only one S-SSB is transmitted within one cycle does not exist, or an interval of an S-SSB within an S-SSB group on a carrier on which a plurality of S-SSBs are transmitted within one cycle is 0; or if a plurality of S-SSBs are transmitted on each carrier within one cycle in the at least two carriers, an interval of an S-SSB within an S-SSB group on each carrier is 0; and
the number of S-SSBs within an S-SSB group meets: the number of S-SSBs included in each S-SSB group on any carrier is a ratio of the number of S-SSBs transmitted on the any carrier within one cycle to the number of S-SSB groups.

It can be understood that, in this manner, when a plurality of S-SSBs are transmitted on the at least two carriers within one cycle, the LTE sets the number of S-SSB groups transmitted on each carrier within one cycle to a first value (which may be referred to as min Lᵢ), where Lᵢ is the number of S-SSBs transmitted on a carrier i within one cycle. In this case, the target interval information meets at least one of the foregoing.

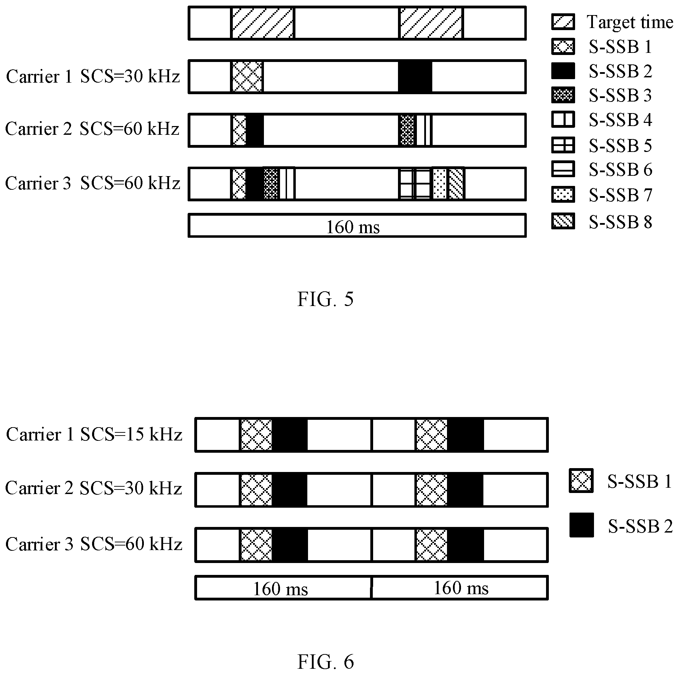

For example, as shown in FIG. 5, a carrier 1, a carrier 2, and a carrier 3 perform CA. It is assumed that a synchronization cycle is 160 ms, an SCS of the carrier 1 is 30 kHz, an SCS of the carrier 2 is 60 kHz, an SCS of the carrier 3 is 60 kHz, and the numbers of S-SSBs transmitted on the carrier 1, the carrier 2, and the carrier 3 within the synchronization cycle are respectively configured as 2, 4, and 8. The UE sets the length of the target time to be the longest first time on each carrier. In this case, the number of S-SSB groups transmitted on each carrier within one cycle is 2, interval 1=interval 2 on each carrier, an interval 3 on each carrier is 0, the number of S-SSBs within each S-SSB group on the carrier 1 is 1, the number of S-SSBs within each S-SSB group on the carrier 2 is 2, and the number of S-SSBs within each S-SSB group on the carrier 3 is 4.

In this embodiment of this application, the LTE may configure a specific S-SSB or group S-SSBs, to ensure that synchronization resources on the carriers are aligned. In this case, no S-SSB needs to be discarded or no virtual S-SSB needs to be sent on any carrier (for example, a corresponding location is padding information).

Optionally, in this embodiment of this application, that the target interval information is determined by common interval information includes: the common interval information is configured by a network side device, preconfigured, predefined, indicated by other user equipment, or autonomously determined by the UE, and interval information of the at least two carriers is the same as the common interval information.

It can be understood that the UE may obtain the common interval information in the foregoing manner, and set the interval information of the at least two carriers to be the same as the common interval information.

Optionally, in this embodiment of this application, the UE may use interval information of a first carrier as common (common) interval information, and the common interval information includes at least one of the following: an SCS of an S-SSB, the number of S-SSBs, the number of S-SSB groups, the interval of the target time, and an interval of an S-SSB (for example, an interval 2 of an S-SSB group or an interval 3 of an S-SSB within an S-SSB group).

For example, as shown in FIG. 6, a carrier 1, a carrier 2, and a carrier 3 perform CA. It is assumed that a synchronization cycle is 160 ms, an SCS of the carrier 1 is 15 kHz, an SCS of the carrier 2 is 30 kHz, an SCS of the carrier 3 is 60 kHz, and original configurations of the numbers of S-SSBs transmitted on the carrier 1, the carrier 2, and the carrier 3 within the synchronization cycle are respectively 2, 2, and 1. The UE selects the carrier 2 as a first carrier, uses interval information of the carrier 2 as common interval information, and sets interval information of each carrier to be the same as the common interval information. Therefore, the numbers of S-SSBs transmitted on the carrier 1 and the carrier 3 within the synchronization cycle change to 2, and an SCS of an S-SSB also changes to 30 kHz. In this case, synchronization resources of the carriers are kept aligned (in this case, alignment of the synchronization resource can be ensured without using the target time).

In this embodiment of this application, the UE may obtain the common interval information (that is, a common S-SSB/S-SSB group configuration) through a configuration of a network side device, a preconfiguration, an indication of other user equipment, or autonomous determining by the UE, and the common interval information is used for all carriers. In this case, configurations (for example, information such as the numbers and intervals) of S-SSBs on the carriers are the same, thereby ensuring alignment of synchronization resources on the carriers.

Optionally, in this embodiment of this application, that the target interval information is determined by reference interval information includes at least one of the following:
when there is a first synchronization resource in to-be-transmitted synchronization resources on a fourth carrier, the first synchronization resource or all synchronization resources are not transmitted, where the first synchronization resource is a synchronization resource that is not within a time determined by the reference interval information; and
when there is a second time on a fifth carrier and the second time is aligned with the time determined by the reference interval information, information transmitted in the second time is padding information or specific information, where the second time is a time in which no synchronization resource is transmitted on the fifth carrier.

It can be understood that if there is the first synchronization resource in the to-be-transmitted synchronization resources on the fourth carrier, the UE does not transmit the first synchronization resource, or does not transmit all synchronization resources; and/or if there is the second time on the fifth carrier and the second time is aligned with the time determined by the reference interval information, the LTE transmits the padding information or the specific information in the second time.

Optionally, in this embodiment of this application, the UE may use interval information of a first carrier as reference (reference) interval information, and the reference interval information includes at least one of the following: an SCS of an S-SSB, the number of S-SSBs, the number of S-SSB groups, the interval of the target time, and an interval of an S-SSB (for example, an interval 2 of an S-SSB group or an interval 3 of an S-SSB within an S-SSB group).

It can be understood that in one manner, for any carrier, if there is an S-SSB/S-SSB group (that is, the first synchronization resource) that needs to be transmitted on the any carrier, and an S-SSB/S-SSB group determined by the reference interval information is not in a same time (for example, the target time), the UE does not transmit the first synchronization resource or does not transmit all S-SSB/S-SSB groups.

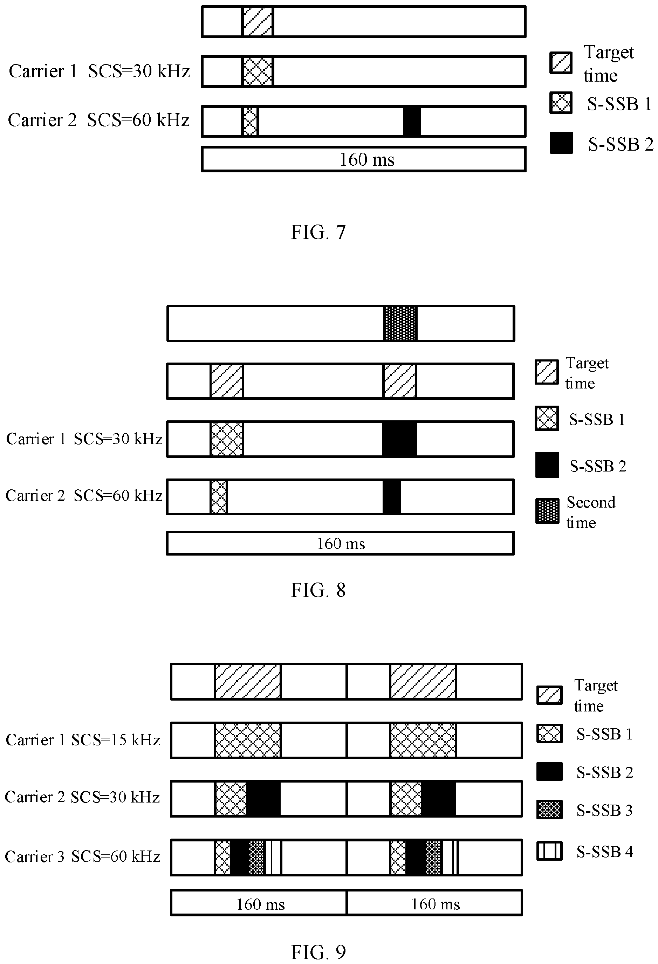

For example, as shown in FIG. 7, a carrier 1 and a carrier 2 perform CA. It is assumed that a synchronization cycle is 160 ms, an SCS of the carrier 1 is 30 kHz, an SCS of the carrier 2 is 60 kHz, and original configurations of the numbers of S-SSBs transmitted on the carrier 1 and the carrier 2 within the synchronization cycle are respectively 1 and 2. The UE uses a first time on the carrier 1 as the target time, uses interval information of the carrier 1 as reference interval information, and sets interval information of each carrier to be the same as the reference interval information. Therefore, transmission of an S-SSB (that is, an S-SSB 2 shown in FIG. 7) that does not fall within the target time needs to be discarded on the carrier 2.

It can be understood that in another manner, for any carrier, if there is the second time on the any carrier (that is, a time in which an S-SSB/S-SSB group is not transmitted), and S-SSB/S-SSB group configurations determined by the reference interval information are aligned, the LTE may transmit a virtual S-SSB/S-SSB group (that is, padding information (for example, redundancy information) or specific information) from a start point of the second time.

For example, as shown in FIG. 8, a carrier 1 and a carrier 2 perform CA. It is assumed that a synchronization cycle is 160 ms, an SCS of the carrier 1 is 30 kHz, an SCS of the carrier 2 is 60 kHz, and original configurations of the numbers of S-SSBs transmitted on the carrier 1 and the carrier 2 within the synchronization cycle are respectively 1 and 2. The UE uses a first time on the carrier 1 as the target time, uses interval information of the carrier 2 as reference interval information, and sets interval information of each carrier to be the same as the reference interval information. Therefore, a virtual S-SSB (that is, an S-SSB 2 shown in FIG. 8) needs to be sent starting from the start point of the second time on the carrier 1.

It should be noted that for the foregoing schemes of the common interval information and the reference interval information, in the scheme of the common interval information, the common interval information is directly used for all carriers, and in the scheme of the reference interval information, based on original interval information of each carrier, synchronization resources on some carriers are discarded or virtual synchronization resources are sent on some carriers, so that synchronization resources on all carriers are in a same time as a synchronization resource determined by the reference interval information.

In this embodiment of this application, the UE may determine the reference interval information (that is, a reference S-SSB/S-SSB group configuration) according to a configuration of a network side device, a preconfiguration, an indication of other user equipment, and autonomous determining by the LTE, and then compare an S-SSB/S-SSB group configuration on each carrier with the reference interval information. S-SSBs on some carriers are discarded or virtual S-SSBs are sent on some carriers, so that synchronization resources on all carriers are in a same time as a synchronization resource determined by the reference interval information, thereby ensuring alignment of synchronization resources on the carriers.

Optionally, in this embodiment of this application, that the target interval information is determined by an SCS of a carrier includes one of the following: being determined by a configuration parameter of a synchronization resource on a first carrier; and the numbers of synchronization resources on different carriers are preset values.

It should be noted that the different carriers may be carriers of different SCSs or carriers of different other attributes. This may be specifically determined according to a use requirement, and is not limited in this embodiment of this application.

It can be understood that in one manner, the UE may determine the first carrier according to a configuration of a network side device, a preconfiguration, an indication of other user equipment, and autonomous determining by the LTE, and determine a configuration of a synchronization resource on another carrier according to a configuration of a synchronization resource on the first carrier, so that synchronization resources on the carriers occupy a same time length.

Optionally, in this embodiment of this application, the number ssbnumᵢ of S-SSBs on a carrier i is ssbnumᵢ=ssbnum₁ * 2^{ui}/2^{u1}, where u₁ is a subcarrier spacing factor corresponding to the first carrier, uᵢ is a subcarrier spacing factor corresponding to the carrier i, and ssbnum₁ is the number of SSBs on the first carrier.

It can be understood that in another manner, the UE may separately set the numbers of synchronization resources on carriers of different SCSs to fixed values, so that the synchronization resources on the carriers occupy a same time length. For example, the number of S-SSBs on a carrier of an SCS=15 kHz is configured as 1, the number of S-SSBs on a carrier of an SCS=30 kHz is 2, and the number of S-SSBs on a carrier of an SCS=60 kHz is 4; or the number of S-SSBs on a carrier of an SCS=15 kHz is configured as 2, the number of S-SSBs on a carrier of an SCS=30 kHz is 4, and the number of S-SSBs on a carrier of an SCS=60 kHz is 8.

For example, as shown in FIG. 9, carriers 1, 2, and 3 perform CA. It is assumed that a synchronization cycle is 160 ms, an SCS of the carrier 1 is 15 kHz, an SCS of the carrier 2 is 30 kHz, and an SCS of the carrier 3 is 60 kHz, and the numbers of S-SSBs transmitted on the carriers 1, 2, and 3 within the synchronization cycle are respectively 1, 2, and 4. In this case, a first time on any carrier may be used as a second time, and synchronization resources of the carriers are kept aligned.

In this embodiment of this application, because SCSs of carriers may be different, a synchronization resource of a corresponding carrier may be configured according to an SCS of the carrier, so that synchronization resources on the carriers are aligned.

Optionally, in this embodiment of this application, the target configuration parameter further includes first information, and the first information is used to indicate whether a synchronization resource is configured on a carrier, where the first information includes at least one of the following: configuring a synchronization resource only on a first carrier, configuring synchronization resources on all carriers used for CA transmission, configuring a synchronization resource on a carrier actually used for CA transmission, configuring a synchronization resource only on a carrier in a first set, and configuring a synchronization resource only on a carrier in a second set.

Optionally, in this embodiment of this application, the first information is further used to indicate that carriers are configured with the same number of synchronization resources.

Optionally, in this embodiment of this application, the first set may be a set A (carriers that can potentially be used as the synchronization carrier), and the second set may be a set B (the available set of synchronization carriers).

Optionally, in this embodiment of this application, the target configuration parameter further includes synchronization resource content (S-SSB content), and the synchronization resource content includes at least one of the following: a DFN, a slot index (Slot index), in-coverage (In-coverage), a duplex configuration, and an SLSS identifier.

Optionally, in this embodiment of this application, the duplex configuration includes at least one of the following: a TDD configuration (TDD configuration) and an FDD configuration.

Optionally, in this embodiment of this application, a DFN value in the synchronization resource is the same as or different from a DFN value in a synchronization resource on a first carrier, or is a preset value.

Optionally, in this embodiment of this application, a slot index value in the synchronization resource is the same as or different from a slot index value in a synchronization resource on a first carrier, or is a preset value.

Optionally, in this embodiment of this application, an in-coverage value in the synchronization resource is the same as or different from an in-coverage value in a synchronization resource on a first carrier, or is a preset value.

Optionally, in this embodiment of this application, a TDD configuration in the synchronization resource is the same as or different from a TDD configuration in a synchronization resource on a first carrier, or is a preset value.

Optionally, in this embodiment of this application, an SLSS identifier in the synchronization resource is the same as or different from an SLSS identifier in a synchronization resource on a first carrier, or is a preset value.

It can be understood that a DFN value in an S-SSB on each carrier is the same as or different from a DFN value in an S-SSB on the first carrier, or is a preset value; and/or a slot index value in an S-SSB on each carrier is the same as or different from a slot index value in an S-SSB on the first carrier, or is a preset value; and/or an in-coverage value in an S-SSB on each carrier is the same as or different from an in-coverage value in an S-SSB on the first carrier, or is a preset value; and/or a TDD configuration in an S-SSB on each carrier is the same as or different from a TDD configuration in an S-SSB on the first carrier, or is a preset value; and/or an SLSS ID in an S-SSB on each carrier is the same as or different from an SLSS ID in an S-SSB on the first carrier, or is a preset value.

Optionally, in this embodiment of this application, a manner of performing carrier synchronization on the at least two carriers includes at least one of the following: timing synchronization and transmission direction synchronization, where the timing synchronization is that a synchronization reference source corresponding to a first carrier is used as a synchronization reference of another carrier, and the transmission direction synchronization is that a transmission direction of a synchronization resource on the first carrier is used as a transmission direction of a target synchronization resource on the another carrier, where the target synchronization resource is a synchronization resource that is on the another carrier and that is aligned with the synchronization resource on the first carrier.

It can be understood that for the timing synchronization, the UE may use the synchronization reference source (synchronization reference source) corresponding to the first carrier as the synchronization reference (synchronization reference) of the another carrier. It should be noted that the timing synchronization may be understood as: determining timing of the another carrier based on timing corresponding to the first carrier.

For the transmission direction synchronization, the UE may determine the transmission direction of the synchronization resource on the first carrier according to a configuration of a network side device, a preconfiguration, an indication of other user equipment, and autonomous determining by the UE and set the transmission direction of the synchronization resource that is on the another carrier and that is aligned with the synchronization resource on the first carrier to be the same as that on the first carrier.

Optionally, in this embodiment of this application, the timing synchronization includes at least one of the following: frame boundary alignment, subframe boundary alignment, slot boundary alignment, symbol boundary alignment, and second/millisecond/microsecond alignment.

Optionally, in this embodiment of this application, the frame boundary alignment may be that frame indexes are the same or different; the subframe boundary alignment may be that subframe indexes are the same or different; the slot boundary alignment may be that slot indexes are the same or different; the symbol boundary alignment may be that symbol indexes are the same or different; and the second/millisecond/microsecond alignment may be that second/millisecond/microsecond indexes are the same or different.

Optionally, in this embodiment of this application, the another carrier is any one of the following: all carriers used for CA transmission, a carrier actually used for CA transmission, a carrier configured with a synchronization resource, a carrier in a first set, and a carrier in a second set.

In this embodiment of this application, the UE may first perform carrier synchronization on the at least two carriers in the foregoing manner, and then determine the target configuration parameter, so that synchronization resources on component carriers are aligned.

Optionally, in this embodiment of this application, a manner in which the UE transmits synchronization signals of the synchronization resources on the at least two carriers is any one of the following:
transmitting, by the UE, a synchronization signal only on a first carrier;
determining, by the UE according to values of interval information of the at least two carriers, whether to transmit synchronization signals on the respective carriers; and
in a case that transmission exceeds a capability of the LTE, autonomously determining, by the UE, a carrier on which a synchronization signal is to be transmitted.

It can be understood that the UE transmits a synchronization signal on at least the first carrier. In one manner, when a synchronization signal on a synchronization resource is allowed to be transmitted only on one carrier, the LTE may transmit a synchronization signal on the first carrier. In another manner, when a synchronization signal on a synchronization resource is allowed to be transmitted on a plurality of carriers, the LTE may determine, based on a value of interval information on the at least two carriers, whether to transmit a synchronization signal on the respective carrier.

For example, if a value of interval information on a carrier 1 is 1, the UE transmits a synchronization signal on the carrier 1. If a value of interval information on the carrier 1 is 0, the UE does not transmit a synchronization signal on the carrier 1.

It should be noted that when transmission exceeds the capability of the LTE (for example, exceeds the maximum number of transmission carriers), the UE independently determines the carrier on which a synchronization signal is to be transmitted, for example, the LTE performs random selection on carriers that meet a transmission condition.

In this embodiment of this application, after determining the target configuration parameter, the UE may transmit a synchronization signal only on the first carrier, or determine, according to the capability of the UE, the carrier on which a synchronization signal is to be transmitted, or transmit synchronization signals on the synchronization resources on the at least two carriers according to the target configuration parameter.

Optionally, in this embodiment of this application, a relationship between the synchronization resources on the at least two carriers and a discontinuous reception (Discontinuous Reception, DRX) mechanism includes at least one of the following:
the target time at least partially overlaps with a DRX active time;
the interval of the target time is an integer multiple of a DRX cycle, or a DRX cycle is an integer multiple of the interval of the target time;
a first time at least partially overlaps with the DRX active time;
an interval of the first time is an integer multiple of the DRX cycle, or the DRX cycle is an integer multiple of an interval of the first time;
a cycle of a synchronization resource is an integer multiple of the DRX cycle, or the DRX cycle is an integer multiple of a cycle of a synchronization resource;
the first time/target time/synchronization resource is located before the DRX active time;
the UE is allowed to transmit a synchronization signal on a synchronization resource in a DRX inactive time; and
the UE is not allowed to transmit a synchronization signal on the synchronization resource in the DRX inactive time.

Optionally, in this embodiment of this application, that the target time at least partially overlaps with a DRX active time includes at least one of the following: a start point of the target time is the same as a start point of the DRX active time, an end point of the target time is the same as an end point of the DRX active time, a first overlapping length is greater than or equal to a first preset threshold, and a ratio of the first overlapping length to the target time/DRX active time/DRX cycle is greater than or equal to a second preset threshold, where the first overlapping length is an overlapping length between the target time and the DRX active time.

Optionally, in this embodiment of this application, that a first time at least partially overlaps with the DRX active time includes at least one of the following: a start point of the first time is the same as a start point of the DRX active time, an end point of the first time is the same as an end point of the DRX active time, a second overlapping length is greater than or equal to a third preset threshold, and a ratio of the second overlapping length to the first time/DRX active time/DRX cycle is greater than or equal to a fourth preset threshold, where the second overlapping length is an overlapping length between the first time and the DRX active time.

Optionally, in this embodiment of this application, the interval of the target time is equal to a DRX cycle; the interval of the first time is equal to a DRX cycle; and a cycle of the S-SSB/S-SSB group is equal to a DRX cycle.

Optionally, in this embodiment of this application, that the first time/target time/synchronization resource is located before the DRX active time may be specifically: a distance between an end point of the first time/second time/S-SSB/S-SSB group and a start point of the DRX active time is greater than a preset threshold.

It should be noted that the DRX active time (active time) may be understood as a time (for example, an active period) in which the UE monitors/receives/demodulates/measures a specific channel/signal/signaling. The DRX active time may include at least one of the following: DRX on duration (DRX on duration), an inactive timer (inactivity timer) running time, and a retransmission timer (retransmission timer) running time.

The DRX inactive time (inactive time) may be understood as a time (for example, a dormant period) in which the UE does not monitor/receive/demodulate/measure a specific channel/signal/signaling. The DRX inactive time may include at least one of the following: DRX off duration (DRX off duration), and a round trip time (Round Trip Time, RTT) timer running time.

Optionally, in this embodiment of this application, the specific channel/signal/signaling may include at least one of the following: a PSCCH, a PSSCH, a physical sidelink broadcast channel (Physical Sidelink Broadcast Channel, PSBCH), a PSFCH, SCI, an S-SSB, and an RS.

This embodiment of this application provides a synchronization resource configuration method. LTE may determine a target configuration parameter to transmit synchronization resources on at least two carriers, where the target configuration parameter includes target time information and/or target interval information, and configuration parameters of the synchronization resources on the at least two carriers are at least partially the same. In this scheme, when a plurality of component carriers perform carrier aggregation, the UE may determine a target time for transmitting a synchronization resource on each carrier, an interval of a target time, and/or an interval of a synchronization resource on each carrier, where configuration parameters of synchronization resources on these determined carriers are partially the same or totally the same. Therefore, synchronization resources on the component carriers may be aligned, so that problems of relatively high time domain occupation of a synchronization resource and a transmission conflict between a synchronization signal and another signal are avoided, thereby improving resource utilization and ensuring reliability of a sidelink service.

It should be noted that the synchronization resource configuration method provided in the embodiments of this application may be performed by UE, or a synchronization resource configuration apparatus, or a control module that is in the synchronization resource configuration apparatus and that is configured to perform the synchronization resource configuration method. In the embodiments of this application, an example in which the UE performs the synchronization resource configuration method is used to describe the synchronization resource configuration apparatus provided in the embodiments of this application.

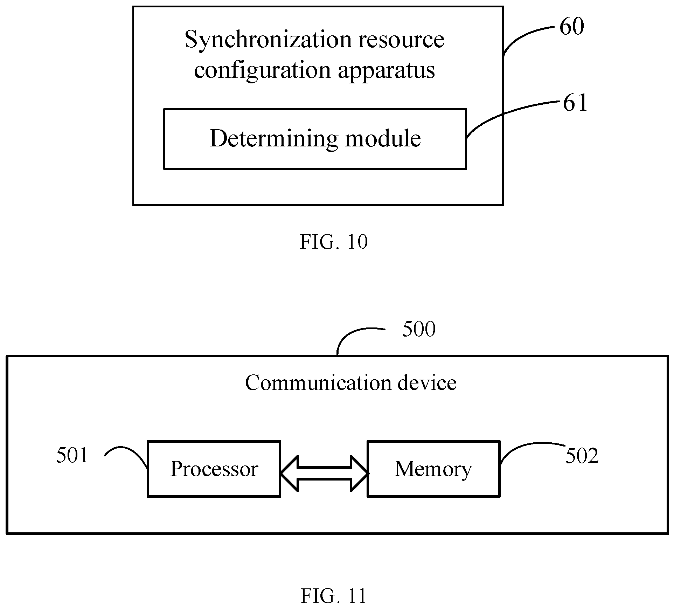

FIG. 10 shows a possible schematic structural diagram of a synchronization resource configuration apparatus according to an embodiment of this application. As shown in FIG. 10, the synchronization resource configuration apparatus 60 may include a determining module 61.

The determining module 61 is configured to determine a target configuration parameter, where the target configuration parameter is used to transmit synchronization resources on at least two carriers, the target configuration parameter includes at least one of the following: target time information and target interval information, the target time information is used to indicate a target time, and the target interval information includes at least one of the following: an interval of a target time and an interval of a synchronization resource, where the target time includes at least a transmission time of a synchronization resource, and configuration parameters of the synchronization resources on the at least two carriers are at least partially the same.

In a possible implementation, the target time information includes at least one of the following: a length of the target time, a start point of the target time, an end point of the target time, and an SCS of the target time.

In a possible implementation, the length of the target time is any one of the following: a length of a first time on a first carrier, a length of a first time on a second carrier, and a preset length, where the second carrier is a carrier with a longest length of a first time in all carriers, and the first time is a time range in which the synchronization resources on the at least two carriers are located; and/or
the start point of the target time includes a start point of a target time on a first carrier and a start point of a target time on another carrier, the start point of the target time on the another carrier is obtained by using a first distance, the first distance is a distance between the start point of the target time on the another carrier and a first location, the first distance is determined by using a second distance, and the second distance is a distance between the start point of the target time on the first carrier and the first location; and/or
the end point of the target time includes an end point of a target time on a first carrier and an end point of a target time on another carrier, the end point of the target time on the another carrier is obtained by using a third distance, the third distance is a distance between the end point of the target time on the another carrier and a first location, the third distance is determined by using a fourth distance, and the fourth distance is a distance between the end point of the target time on the first carrier and the first location; and/or
the SCS of the target time meets any one of the following: being the same as an SCS of a first time on a first carrier, an SCS of a target time on each carrier is the same as an SCS of a first time on the respective carrier, being the same as a maximum SCS of all carriers, being the same as a maximum SCS of all carriers, and being a preset SCS, where
the first carrier is a carrier selected by the UE from the at least two carriers, and the first location is any one of the following: a location of a DFN0/SFN0 on a carrier, a start point of a synchronization cycle on a carrier, and an end point of a synchronization cycle on a carrier.

In a possible implementation, the target interval information is determined by at least one of the following: specific interval information; group information of a synchronization resource; common interval information; reference interval information; and an SCS of a carrier.

In a possible implementation, the specific interval information includes at least one of the following:
only one S-SSB is transmitted within a transmission cycle;
the number of S-SSBs within each synchronization resource is 1;
there is only one target time within a transmission cycle;
the interval of the target time does not exist;
an interval of an S-SSB group does not exist;
an interval of an S-SSB within an S-SSB group does not exist; and
the number of S-SSB groups is 1.

In a possible implementation, in a first case, the target interval information meets at least one of the following:
the interval of the target time does not exist;
an interval of an S-SSB group does not exist; and
an interval of an S-SSB within an S-SSB group meets: an interval of an S-SSB within an S-SSB group on a carrier on which one S-SSB is transmitted within one cycle does not exist, or an interval of an S-SSB within an S-SSB group on a carrier on which a plurality of S-SSBs are transmitted within one cycle is 0, where
the first case meets: the group information of the synchronization resource is used to indicate that when a plurality of S-SSBs are transmitted on the at least two carriers within one cycle, the number of S-SSB groups transmitted on each carrier within one cycle is configured as 1.

In a possible implementation, in a second case, the target interval information meets at least one of the following:
the interval of the target time meets: if there is a carrier on which only one S-SSB is transmitted within one cycle in the at least two carriers, the interval of the target time does not exist; or if there is no carrier on which only one S-SSB is transmitted within one cycle, the interval of the target time is configured by a network side device, preconfigured, predefined, autonomously determined by the UE, or indicated by other UE;
an interval of an S-SSB group meets: if there is a carrier on which only one S-SSB is transmitted within one cycle in the at least two carriers, the interval of the S-SSB group does not exist; or if there is no carrier on which only one S-SSB is transmitted within one cycle, the interval of the S-SSB group is the same as the interval of the target time;
an interval of an S-SSB within an S-SSB group meets: if there is a carrier on which only one S-SSB is transmitted within one cycle in the at least two carriers, an interval of an S-SSB within an S-SSB group on a carrier on which only one S-SSB is transmitted within one cycle does not exist, or an interval of an S-SSB within an S-SSB group on a carrier on which a plurality of S-SSBs are transmitted within one cycle is 0; or if there is no carrier on which only one S-SSB is transmitted within one cycle, an interval of an S-SSB within an S-SSB group on each carrier is 0; and
the number of S-SSBs within an S-SSB group meets: the number of S-SSBs included in each S-SSB group on any carrier is a ratio of the number of S-SSBs transmitted on the any carrier within one cycle to the number of S-SSB groups, where
the second case meets: the group information of the synchronization resource is used to indicate that when a plurality of S-SSBs are transmitted on the at least two carriers within one cycle, the number of S-SSB groups transmitted on each carrier within one cycle is configured as a first value, the first value is the number of S-SSBs transmitted on a third carrier within one cycle, and the third carrier is a carrier with the minimum number of S-SSBs transmitted within one cycle.

In a possible implementation, that the target interval information is determined by common interval information includes: the common interval information is configured by a network side device, preconfigured, predefined, indicated by other user equipment, or autonomously determined by the UE, and interval information of the at least two carriers is the same as the common interval information.

In a possible implementation, that the target interval information is determined by reference interval information includes at least one of the following:
when there is a first synchronization resource in to-be-transmitted synchronization resources on a fourth carrier, the first synchronization resource or all synchronization resources are not transmitted, where the first synchronization resource is a synchronization resource that is not within a time determined by the reference interval information; and
when there is a second time on a fifth carrier and the second time is aligned with the time determined by the reference interval information, information transmitted in the second time is padding information or specific information, where the second time is a time in which no synchronization resource is transmitted on the fifth carrier.

In a possible implementation, the common interval information or the reference interval information includes at least one of the following: an SCS of an S-SSB, the number of S-SSBs, the number of S-SSB groups, the interval of the target time, and an interval of an S-SSB.

In a possible implementation, that the target interval information is determined by an SCS of a carrier includes one of the following: being determined by a configuration parameter of a synchronization resource on a first carrier; and the numbers of synchronization resources on different carriers are preset values.

In a possible implementation, the target configuration parameter is determined by any one of the following: a first time, a configuration of a network side device, a preconfiguration, an indication of other user equipment, and autonomous determining by the UE, where the first time is a time range in which the synchronization resources on the at least two carriers are located.

In a possible implementation, a resource within the first time does not belong to a resource pool; or a resource within the first time is not used to transmit a specific channel/specific signal/specific signaling.

In a possible implementation, a resource within the target time does not belong to a resource pool; or a resource within the target time is not used to transmit a specific channel/specific signal/specific signaling.

In a possible implementation, a relationship between the synchronization resources on the at least two carriers and a discontinuous reception DRX mechanism includes at least one of the following:
the target time at least partially overlaps with a DRX active time;
the interval of the target time is an integer multiple of a DRX cycle, or a DRX cycle is an integer multiple of the interval of the target time;
a first time at least partially overlaps with the DRX active time;
an interval of the first time is an integer multiple of the DRX cycle, or the DRX cycle is an integer multiple of an interval of the first time;
a cycle of a synchronization resource is an integer multiple of the DRX cycle, or the DRX cycle is an integer multiple of a cycle of a synchronization resource;
the first time/target time/synchronization resource is located before the DRX active time;
the UE is allowed to transmit a synchronization signal on a synchronization resource in a DRX inactive time; and
the UE is not allowed to transmit a synchronization signal on the synchronization resource in the DRX inactive time, where
the first time is a time range in which the synchronization resources on the at least two carriers are located.

In a possible implementation, that the target time at least partially overlaps with a DRX active time includes at least one of the following: a start point of the target time is the same as a start point of the DRX active time, an end point of the target time is the same as an end point of the DRX active time, a first overlapping length is greater than or equal to a first preset threshold, and a ratio of the first overlapping length to the target time/DRX active time/DRX cycle is greater than or equal to a second preset threshold, where the first overlapping length is an overlapping length between the target time and the DRX active time; and/or
that a first time at least partially overlaps with the DRX active time includes at least one of the following: a start point of the first time is the same as a start point of the DRX active time, an end point of the first time is the same as an end point of the DRX active time, a second overlapping length is greater than or equal to a third preset threshold, and a ratio of the second overlapping length to the first time/DRX active time/DRX cycle is greater than or equal to a fourth preset threshold, where the second overlapping length is an overlapping length between the first time and the DRX active time.

In a possible implementation, the target configuration parameter further includes first information, and the first information is used to indicate whether a synchronization resource is configured on a carrier, where the first information includes at least one of the following: configuring a synchronization resource only on a first carrier, configuring synchronization resources on all carriers used for CA transmission, configuring a synchronization resource on a carrier actually used for CA transmission, configuring a synchronization resource only on a carrier in a first set, and configuring a synchronization resource only on a carrier in a second set.

In a possible implementation, the first information is further used to indicate that carriers are configured with the same number of synchronization resources.

In a possible implementation, the target configuration parameter further includes synchronization resource content, and the synchronization resource content includes at least one of the following: a DFN, a slot index, in-coverage, a duplex configuration, and an SLSS identifier.

In a possible implementation, a DFN value in the synchronization resource is the same as or different from a DFN value in a synchronization resource on a first carrier, or is a preset value; and/or
a slot index value in the synchronization resource is the same as or different from a slot index value in a synchronization resource on a first carrier, or is a preset value; and/or
an in-coverage value in the synchronization resource is the same as or different from an in-coverage value in a synchronization resource on a first carrier, or is a preset value; and/or
a TDD configuration in the synchronization resource is the same as or different from a TDD configuration in a synchronization resource on a first carrier, or is a preset value; and/or
an SLSS identifier in the synchronization resource is the same as or different from an SLSS identifier in a synchronization resource on a first carrier, or is a preset value.

In a possible implementation, carrier synchronization is performed on the at least two carriers in at least one of the following manners: timing synchronization and transmission direction synchronization, where the timing synchronization is that a synchronization reference source corresponding to a first carrier is used as a synchronization reference of another carrier, and the transmission direction synchronization is that a transmission direction of a synchronization resource on the first carrier is used as a transmission direction of a target synchronization resource on the another carrier, where the target synchronization resource is a synchronization resource that is on the another carrier and that is aligned with the synchronization resource on the first carrier.

In a possible implementation, the timing synchronization includes at least one of the following: frame boundary alignment, subframe boundary alignment, slot boundary alignment, symbol boundary alignment, and second/millisecond/microsecond alignment.

In a possible implementation, the another carrier is any one of the following: all carriers used for CA transmission, a carrier actually used for CA transmission, a carrier configured with a synchronization resource, a carrier in a first set, and a carrier in a second set.

In a possible implementation, synchronization signals of the synchronization resources are transmitted on the at least two carriers in any one of the following manners:
transmitting, by the UE, a synchronization signal only on a first carrier;
determining, by the UE according to values of interval information of the at least two carriers, whether to transmit synchronization signals on the respective carriers; and
in a case that transmission exceeds a capability of the LTE, autonomously determining, by the UE, a carrier on which a synchronization signal is to be transmitted.

In a possible implementation, the first carrier is determined by at least one of the following: an SCS of a carrier, a priority of a carrier, a synchronization priority order of a carrier, a synchronization reference of a carrier, an SLSS identifier of a carrier, a duplex pattern of a carrier, the number of synchronization resources of a carrier, the number of S-SSBs of a carrier, a frequency of a carrier, a frequency band/frequency range of a carrier, an ARFCN of a carrier, a GSCN of a carrier, a coverage state corresponding to a carrier, whether a base station/GNSS is detected on a carrier, and an index of a carrier.

In a possible implementation, the first carrier is any one of the following: a carrier with a maximum SCS, a carrier with a minimum SCS, and a carrier with a specific SCS.

In a possible implementation, the first carrier is any one of the following: a carrier with a highest priority during carrier selection, a carrier with a lowest priority during carrier selection, a carrier with a specific priority, a carrier with a highest priority during synchronization reference selection, and a carrier with a lowest priority during synchronization reference selection; and/or
the first carrier is any one of the following: a carrier whose synchronization priority order is a base station, and a carrier whose synchronization priority order is a GNSS.

In a possible implementation, the first carrier is any one of the following: a carrier whose synchronization reference is a base station, a carrier whose synchronization reference is a GNSS, and a carrier whose synchronization reference is synchronization reference user equipment; and/or
the first carrier is any one of the following: a carrier with a minimum SLSS identifier and a carrier with a specific SLSS identifier; and/or
the first carrier is any one of the following: a carrier whose duplex pattern is TDD, a carrier for which a TDD configuration has been obtained, a carrier within an unpaired band, a carrier whose duplex pattern is FDD, a carrier for which a TDD configuration is not obtained, and a carrier within a paired band; and/or
the first carrier is a carrier with the specific number of synchronization resources; and/or
the first carrier is any one of the following: a carrier with the minimum number of S-SSBs within one synchronization cycle, a carrier with the maximum number of S-SSBs within one synchronization cycle, and a carrier with the specific number of S-SSBs within one synchronization cycle.

In a possible implementation, the first carrier is any one of the following: a carrier with a lowest frequency, a carrier with a highest frequency, and a carrier with a specific frequency; and/or
the first carrier is any one of the following: a carrier with a lowest frequency band/frequency range, a carrier with a highest frequency band/frequency range, a carrier with a minimum frequency band/frequency range, a carrier with a maximum frequency band/frequency range, and a carrier with a specific frequency band/frequency range.

In a possible implementation, the first carrier is any one of the following: a carrier with a minimum ARFCN, a carrier with a maximum ARFCN, and a carrier with a specific ARFCN; and/or
the first carrier is any one of the following: a carrier with a minimum GSCN, a carrier with a maximum GSCN, and a carrier with a specific GSCN; and/or
the first carrier is any one of the following: a carrier within in-coverage and a carrier outside in-coverage; and/or
the first carrier is any one of the following: a carrier on which a base station is detected and a carrier on which a GNSS is detected; and/or
the first carrier is any one of the following: a carrier with a minimum index, a carrier with a maximum index, and a carrier with a specific index.

This embodiment of this application provides a synchronization resource configuration apparatus. When a plurality of component carriers perform carrier aggregation, UE may determine a target time for transmitting a synchronization resource on each carrier, an interval of a target time, and/or an interval of a synchronization resource on each carrier, where configuration parameters of synchronization resources on these determined carriers are partially the same or totally the same. Therefore, synchronization resources on the component carriers may be aligned, so that problems of relatively high time domain occupation of a synchronization resource and a transmission conflict between a synchronization signal and another signal are avoided, thereby improving resource utilization and ensuring reliability of a sidelink service.

The synchronization resource configuration apparatus in this embodiment of this application may be an apparatus, an apparatus or UE with an operating system, or may be a component, an integrated circuit, or a chip in UE. The apparatus or the UE may be a mobile terminal, or a non-mobile terminal. For example, the mobile terminal may include but is not limited to the types of the foregoing listed UE 11, and the non-mobile terminal may be a server, a network attached storage (Network Attached Storage, NAS), a personal computer (Personal Computer, PC), a television (Television, TV), an automated teller machine, or a self-service machine. This is not specifically limited in this embodiment of this application.

The synchronization resource configuration apparatus provided in this embodiment of this application can implement the processes implemented in the foregoing method embodiment, and achieve a same technical effect. To avoid repetition, details are not described herein again.

Optionally, as shown in FIG. 11, an embodiment of this application further provides a communication device 500, including a processor 501, a memory 502, and a program or an instruction that is stored in the memory 502 and that can be run on the processor 501. For example, when the communication device 500 is UE, the program or the instruction is executed by the processor 501 to implement the processes of the foregoing method embodiment, and a same technical effect can be achieved.

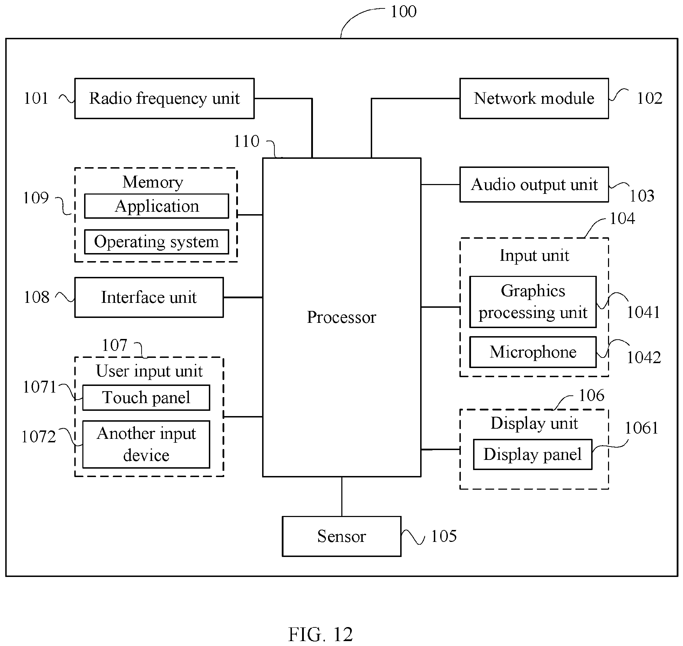

An embodiment of this application further provides UE, including a processor and a communication interface, where the processor is configured to determine a target configuration parameter, where the target configuration parameter is used to transmit synchronization resources on at least two carriers, the target configuration parameter includes at least one of the following: target time information and target interval information, the target time information is used to indicate a target time, and the target interval information includes at least one of the following: an interval of a target time and an interval of a synchronization resource, where the target time includes at least a time of transmitting a synchronization resource, and configuration parameters of the synchronization resources on the at least two carriers are at least partially the same. This embodiment of the UE corresponds to the foregoing method embodiment on the UE side. Each implementation process and implementation of the foregoing method embodiment may be applicable to this embodiment of the UE, and a same technical effect can be achieved. Specifically, FIG. 12 is a schematic structural diagram of hardware of LTE according to an embodiment of this application.

The UE 100 includes but is not limited to at least a part of components such as a radio frequency unit 101, a network module 102, an audio output unit 103, an input unit 104, a sensor 105, a display unit 106, a user input unit 107, an interface unit 108, a memory 109, and a processor 110.

A person skilled in the art can understand that the UE 100 may further include a power supply (such as a battery) that supplies power to each component. The power supply may be logically connected to the processor 110 by using a power supply management system, to implement functions such as charging and discharging management, and power consumption management by using the power supply management system. The structure of the LTE shown in FIG. 12 constitutes no limitation on the UE, and the UE may include more or fewer components than those shown in the figure, or combine some components, or have different component arrangements. Details are not described herein.

It should be understood that, in this embodiment of this application, the input unit 104 may include a graphics processing unit (Graphics Processing Unit, GPU) 1041 and a microphone 1042, and the graphics processing unit 1041 processes image data of a still picture or a video obtained by an image capture apparatus (such as a camera) in a video capture mode or an image capture mode. The display unit 106 may include a display panel 1061. Optionally, the display panel 1061 may be configured in a form such as a liquid crystal display or an organic light-emitting diode. The user input unit 107 includes a touch panel 1071 and another input device 1072. The touch panel 1071 is also referred to as a touchscreen. The touch panel 1071 may include two parts: a touch detection apparatus and a touch controller. The another input device 1072 may include but is not limited to a physical keyboard, a functional button (such as a volume control button or a power on/off button), a trackball, a mouse, and a joystick. Details are not described herein.

In this embodiment of this application, the radio frequency unit 101 receives downlink data from a network side device and then sends the downlink data to the processor 110 for processing; and sends uplink data to the network side device. Usually, the radio frequency unit 101 includes but is not limited to an antenna, at least one amplifier, a transceiver, a coupler, a low noise amplifier, a duplexer, and the like.

The memory 109 may be configured to store a software program or an instruction and various data. The memory 109 may mainly include a program or instruction storage area and a data storage area. The program or instruction storage area may store an operating system, and an application or an instruction required by at least one function (for example, a sound playing function or an image playing function). In addition, the memory 109 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one magnetic disk storage component, a flash memory component, or another volatile solid-state storage component.

The processor 110 may include one or more processing units. Optionally, an application processor and a modem processor may be integrated into the processor 110. The application processor mainly processes an operating system, a user interface, an application, an instruction, or the like. The modem processor mainly processes wireless communication, for example, a baseband processor. It can be understood that, alternatively, the modem processor may not be integrated into the processor 110.

The processor 110 is configured to determine a target configuration parameter, where the target configuration parameter is used to transmit synchronization resources on at least two carriers, the target configuration parameter includes at least one of the following: target time information and target interval information, the target time information is used to indicate a target time, and the target interval information includes at least one of the following: an interval of a target time and an interval of a synchronization resource, where the target time includes at least a time of transmitting a synchronization resource, and configuration parameters of the synchronization resources on the at least two carriers are at least partially the same.

This embodiment of this application provides UE. When a plurality of component carriers perform carrier aggregation, the UE may determine a target time for transmitting a synchronization resource on each carrier, an interval of a target time, and/or an interval of a synchronization resource on each carrier, where configuration parameters of synchronization resources on these determined carriers are partially the same or totally the same. Therefore, synchronization resources on the component carriers may be aligned, so that problems of relatively high time domain occupation of a synchronization resource and a transmission conflict between a synchronization signal and another signal are avoided, thereby improving resource utilization and ensuring reliability of a sidelink service.

The UE provided in this embodiment of this application can implement the processes implemented in the foregoing method embodiment, and achieve a same technical effect. To avoid repetition, details are not described herein again.

An embodiment of this application further provides a readable storage medium. The readable storage medium stores a program or an instruction, and when the program or the instruction is executed by a processor, the processes of the foregoing synchronization resource configuration method embodiment are implemented and a same technical effect can be achieved. To avoid repetition, details are not described herein again.

The processor is a processor in the UE in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface, the communication interface is coupled to the processor, and the processor is configured to run a program or an instruction to implement the processes of the foregoing synchronization resource configuration method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical schemes of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, an air conditioner, a network side device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A synchronization resource configuration method, comprising:
determining, by user equipment UE, a target configuration parameter, wherein the target configuration parameter is used to transmit synchronization resources on at least two carriers, the target configuration parameter comprises at least one of the following: target time information and target interval information, the target time information is used to indicate a target time, and the target interval information comprises at least one of the following: an interval of a target time and an interval of a synchronization resource, wherein
the target time comprises at least a transmission time of a synchronization resource, and configuration parameters of the synchronization resources on the at least two carriers are at least partially the same.

2. The method according to claim 1, wherein the target time information comprises at least one of the following: a length of the target time, a start point of the target time, an end point of the target time, and a subcarrier spacing SCS of the target time.

3. The method according to claim 2, wherein the length of the target time is any one of the following: a length of a first time on a first carrier, a length of a first time on a second carrier, and a preset length, wherein the second carrier is a carrier with a longest length of a first time in all carriers, and the first time is a time range in which the synchronization resources on the at least two carriers are located;
and/or
the start point of the target time comprises a start point of a target time on a first carrier and a start point of a target time on another carrier, the start point of the target time on the another carrier is obtained by using a first distance, the first distance is a distance between the start point of the target time on the another carrier and a first location, the first distance is determined by using a second distance, and the second distance is a distance between the start point of the target time on the first carrier and the first location;
and/or
the end point of the target time comprises an end point of a target time on a first carrier and an end point of a target time on another carrier, the end point of the target time on the another carrier is obtained by using a third distance, the third distance is a distance between the end point of the target time on the another carrier and a first location, the third distance is determined by using a fourth distance, and the fourth distance is a distance between the end point of the target time on the first carrier and the first location;
and/or
the SCS of the target time meets any one of the following: being the same as an SCS of a first time on a first carrier, an SCS of a target time on each carrier is the same as an SCS of a first time on the respective carrier, being the same as a maximum SCS of all carriers, being the same as a maximum SCS of all carriers, and being a preset SCS, wherein
the first carrier is a carrier selected by the UE from the at least two carriers, and the first location is any one of the following: a location of a direct frame number DFNO/system frame number SFNO on a carrier, a start point of a synchronization cycle on a carrier, and an end point of a synchronization cycle on a carrier.

4. The method according to claim 1, wherein the target interval information is determined by at least one of the following:
specific interval information;
group information of a synchronization resource;
common interval information;
reference interval information; and
an SCS of a carrier.

5. The method according to claim 4, wherein the specific interval information comprises at least one of the following:
only one sidelink-synchronization signal block S-SSB is transmitted within a transmission cycle;
the number of S-SSBs within each synchronization resource is 1;
there is only one target time within a transmission cycle;
the interval of the target time does not exist;
an interval of an S-SSB group does not exist;
an interval of an S-SSB within an S-SSB group does not exist; and
the number of S-SSB groups is 1.

6. The method according to claim 4, wherein in a first case, the target interval information meets at least one of the following:
the interval of the target time does not exist;
an interval of an S-SSB group does not exist; and
an interval of an S-SSB within an S-SSB group meets: an interval of an S-SSB within an S-SSB group on a carrier on which one S-SSB is transmitted within one cycle does not exist, or an interval of an S-SSB within an S-SSB group on a carrier on which a plurality of S-SSBs are transmitted within one cycle is 0, wherein
the first case meets: the group information of the synchronization resource is used to indicate that when a plurality of S-SSBs are transmitted on the at least two carriers within one cycle, the number of S-SSB groups transmitted on each carrier within one cycle is configured as 1.

7. The method according to claim 4, wherein in a second case, the target interval information meets at least one of the following:
the interval of the target time meets: if there is a carrier on which only one S-SSB is transmitted within one cycle in the at least two carriers, the interval of the target time does not exist; or if there is no carrier on which only one S-SSB is transmitted within one cycle, the interval of the target time is configured by a network side device, preconfigured, predefined, autonomously determined by the UE, or indicated by other UE;
an interval of an S-SSB group meets: if there is a carrier on which only one S-SSB is transmitted within one cycle in the at least two carriers, the interval of the S-SSB group does not exist; or if there is no carrier on which only one S-SSB is transmitted within one cycle, the interval of the S-SSB group is the same as the interval of the target time;
an interval of an S-SSB within an S-SSB group meets: if there is a carrier on which only one S-SSB is transmitted within one cycle in the at least two carriers, an interval of an S-SSB within an S-SSB group on a carrier on which only one S-SSB is transmitted within one cycle does not exist, or an interval of an S-SSB within an S-SSB group on a carrier on which a plurality of S-SSBs are transmitted within one cycle is 0; or if there is no carrier on which only one S-SSB is transmitted within one cycle, an interval of an S-SSB within an S-SSB group on each carrier is 0; and
the number of S-SSBs within an S-SSB group meets: the number of S-SSBs comprised in each S-SSB group on any carrier is a ratio of the number of S-SSBs transmitted on the any carrier within one cycle to the number of S-SSB groups, wherein
the second case meets: the group information of the synchronization resource is used to indicate that when a plurality of S-SSBs are transmitted on the at least two carriers within one cycle, the number of S-SSB groups transmitted on each carrier within one cycle is configured as a first value, the first value is the number of S-SSBs transmitted on a third carrier within one cycle, and the third carrier is a carrier with the minimum number of S-SSBs transmitted within one cycle.

8. The method according to claim 4, wherein that the target interval information is determined by common interval information comprises:
the common interval information is configured by a network side device, preconfigured, predefined, indicated by other user equipment, or autonomously determined by the UE, and interval information of the at least two carriers is the same as the common interval information.

9. The method according to claim 4, wherein that the target interval information is determined by reference interval information comprises at least one of the following:
when there is a first synchronization resource in to-be-transmitted synchronization resources on a fourth carrier, the first synchronization resource or all synchronization resources are not transmitted, wherein the first synchronization resource is a synchronization resource that is not within a time determined by the reference interval information; and
when there is a second time on a fifth carrier and the second time is aligned with the time determined by the reference interval information, information transmitted in the second time is padding information or specific information, wherein the second time is a time in which no synchronization resource is transmitted on the fifth carrier.

10. The method according to claim 4, 8, or 9, wherein the common interval information or the reference interval information comprises at least one of the following: an SCS of an S-SSB, the number of S-SSBs, the number of S-SSB groups, the interval of the target time, and an interval of an S-SSB.

11. The method according to claim 4, wherein that the target interval information is determined by an SCS of a carrier comprises one of the following:
being determined by a configuration parameter of a synchronization resource on a first carrier; and
the numbers of synchronization resources on different carriers are preset values.

12. The method according to claim 1, wherein the target configuration parameter is determined by any one of the following: a first time, a configuration of a network side device, a preconfiguration, an indication of other user equipment, and autonomous determining by the UE, wherein
the first time is a time range in which the synchronization resources on the at least two carriers are located.

13. The method according to claim 12, wherein a resource within the first time does not belong to a resource pool;
or
a resource within the first time is not used to transmit a specific channel/specific signal/specific signaling.

14. The method according to claim 1, 12, or 13, wherein a resource within the target time does not belong to a resource pool;
or
a resource within the target time is not used to transmit a specific channel/specific signal/specific signaling.

15. The method according to claim 1, wherein a relationship between the synchronization resources on the at least two carriers and a discontinuous reception DRX mechanism comprises at least one of the following:
the target time at least partially overlaps with a DRX active time;
the interval of the target time is an integer multiple of a DRX cycle, or a DRX cycle is an integer multiple of the interval of the target time;
a first time at least partially overlaps with the DRX active time;
an interval of the first time is an integer multiple of the DRX cycle, or the DRX cycle is an integer multiple of an interval of the first time;
a cycle of a synchronization resource is an integer multiple of the DRX cycle, or the DRX cycle is an integer multiple of a cycle of a synchronization resource;
the first time/target time/synchronization resource is located before the DRX active time;
the UE is allowed to transmit a synchronization signal on a synchronization resource in a DRX inactive time; and
the UE is not allowed to transmit a synchronization signal on the synchronization resource in the DRX inactive time, wherein
the first time is a time range in which the synchronization resources on the at least two carriers are located.

16. The method according to claim 15, wherein that the target time at least partially overlaps with a DRX active time comprises at least one of the following: a start point of the target time is the same as a start point of the DRX active time, an end point of the target time is the same as an end point of the DRX active time, a first overlapping length is greater than or equal to a first preset threshold, and a ratio of the first overlapping length to the target time/DRX active time/DRX cycle is greater than or equal to a second preset threshold, wherein the first overlapping length is an overlapping length between the target time and the DRX active time;
and/or
that a first time at least partially overlaps with the DRX active time comprises at least one of the following: a start point of the first time is the same as a start point of the DRX active time, an end point of the first time is the same as an end point of the DRX active time, a second overlapping length is greater than or equal to a third preset threshold, and a ratio of the second overlapping length to the first time/DRX active time/DRX cycle is greater than or equal to a fourth preset threshold, wherein the second overlapping length is an overlapping length between the first time and the DRX active time.

17. The method according to claim 1, wherein the target configuration parameter further comprises first information, and the first information is used to indicate whether a synchronization resource is configured on a carrier, wherein
the first information comprises at least one of the following: configuring a synchronization resource only on a first carrier, configuring synchronization resources on all carriers used for carrier aggregation CA transmission, configuring a synchronization resource on a carrier actually used for CA transmission, configuring a synchronization resource only on a carrier in a first set, and configuring a synchronization resource only on a carrier in a second set.

18. The method according to claim 17, wherein the first information is further used to indicate that carriers are configured with the same number of synchronization resources.

19. The method according to claim 1, wherein the target configuration parameter further comprises synchronization resource content, and the synchronization resource content comprises at least one of the following: a DFN, a slot index, in-coverage, a duplex configuration, and a sidelink synchronization signal SLSS identifier.

20. The method according to claim 19, wherein a DFN value in the synchronization resource is the same as or different from a DFN value in a synchronization resource on a first carrier, or is a preset value;
and/or
a slot index value in the synchronization resource is the same as or different from a slot index value in a synchronization resource on a first carrier, or is a preset value;
and/or
an in-coverage value in the synchronization resource is the same as or different from an in-coverage value in a synchronization resource on a first carrier, or is a preset value;
and/or
a TDD configuration in the synchronization resource is the same as or different from a TDD configuration in a synchronization resource on a first carrier, or is a preset value;
and/or
an SLSS identifier in the synchronization resource is the same as or different from an SLSS identifier in a synchronization resource on a first carrier, or is a preset value.

21. The method according to claim 1, further comprising:
performing carrier synchronization on the at least two carriers in at least one of the following manners: timing synchronization and transmission direction synchronization, wherein
the timing synchronization is that a synchronization reference source corresponding to a first carrier is used as a synchronization reference of another carrier, and the transmission direction synchronization is that a transmission direction of a synchronization resource on the first carrier is used as a transmission direction of a target synchronization resource on the another carrier, wherein the target synchronization resource is a synchronization resource that is on the another carrier and that is aligned with the synchronization resource on the first carrier.

22. The method according to claim 21, wherein the timing synchronization comprises at least one of the following: frame boundary alignment, subframe boundary alignment, slot boundary alignment, symbol boundary alignment, and second/millisecond/microsecond alignment.

23. The method according to claim 21, wherein the another carrier is any one of the following: all carriers used for CA transmission, a carrier actually used for CA transmission, a carrier configured with a synchronization resource, a carrier in a first set, and a carrier in a second set.

24. The method according to claim 1, further comprising:
transmitting synchronization signals of the synchronization resources on the at least two carriers in any one of the following manners:
transmitting, by the UE, a synchronization signal only on a first carrier;
determining, by the LTE according to values of interval information of the at least two carriers, whether to transmit synchronization signals on the respective carriers; and
in a case that transmission exceeds a capability of the UE, autonomously determining, by the UE, a carrier on which a synchronization signal is to be transmitted.

25. The method according to claim 3, 11, 17, 20, 21, or 24, wherein the first carrier is determined by at least one of the following: an SCS of a carrier, a priority of a carrier, a synchronization priority order of a carrier, a synchronization reference of a carrier, an SLSS identifier of a carrier, a duplex pattern of a carrier, the number of synchronization resources of a carrier, the number of S-SSBs of a carrier, a frequency of a carrier, a frequency band/frequency range of a carrier, an absolute radio frequency channel number ARFCN of a carrier, a global synchronization channel number GSCN of a carrier, a coverage state corresponding to a carrier, whether a base station/global navigation satellite system GNSS is detected on a carrier, and an index of a carrier.

26. The method according to claim 25, wherein the first carrier is any one of the following: a carrier with a maximum SCS, a carrier with a minimum SCS, and a carrier with a specific SCS.

27. The method according to claim 25, wherein the first carrier is any one of the following: a carrier with a highest priority during carrier selection, a carrier with a lowest priority during carrier selection, a carrier with a specific priority, a carrier with a highest priority during synchronization reference selection, and a carrier with a lowest priority during synchronization reference selection;
and/or
the first carrier is any one of the following: a carrier whose synchronization priority order is a base station, and a carrier whose synchronization priority order is a GNSS.

28. The method according to claim 25, wherein the first carrier is any one of the following: a carrier whose synchronization reference is a base station, a carrier whose synchronization reference is a GNSS, and a carrier whose synchronization reference is synchronization reference user equipment;
and/or
the first carrier is any one of the following: a carrier with a minimum SLSS identifier and a carrier with a specific SLSS identifier;
and/or
the first carrier is any one of the following: a carrier whose duplex pattern is TDD, a carrier for which a TDD configuration has been obtained, a carrier within an unpaired band, a carrier whose duplex pattern is frequency division duplex FDD, a carrier for which a TDD configuration is not obtained, and a carrier within a paired band;
and/or
the first carrier is a carrier with the specific number of synchronization resources;
and/or
the first carrier is any one of the following: a carrier with the minimum number of S-SSBs within one synchronization cycle, a carrier with the maximum number of S-SSBs within one synchronization cycle, and a carrier with the specific number of S-SSBs within one synchronization cycle.

29. The method according to claim 25, wherein the first carrier is any one of the following: a carrier with a lowest frequency, a carrier with a highest frequency, and a carrier with a specific frequency;
and/or
the first carrier is any one of the following: a carrier with a lowest frequency band/frequency range, a carrier with a highest frequency band/frequency range, a carrier with a minimum frequency band/frequency range, a carrier with a maximum frequency band/frequency range, and a carrier with a specific frequency band/frequency range.

30. The method according to claim 25, wherein the first carrier is any one of the following: a carrier with a minimum ARFCN, a carrier with a maximum ARFCN, and a carrier with a specific ARFCN;
and/or
the first carrier is any one of the following: a carrier with a minimum GSCN, a carrier with a maximum GSCN, and a carrier with a specific GSCN;
and/or
the first carrier is any one of the following: a carrier within in-coverage and a carrier outside in-coverage;
and/or
the first carrier is any one of the following: a carrier on which a base station is detected and a carrier on which a GNSS is detected;
and/or
the first carrier is any one of the following: a carrier with a minimum index, a carrier with a maximum index, and a carrier with a specific index.

31. A synchronization resource configuration apparatus, wherein the apparatus comprises a determining module, wherein
the determining module is configured to determine a target configuration parameter, wherein the target configuration parameter is used to transmit synchronization resources on at least two carriers, the target configuration parameter comprises at least one of the following: target time information and target interval information, the target time information is used to indicate a target time, and the target interval information comprises at least one of the following: an interval of a target time and an interval of a synchronization resource, wherein
the target time comprises at least a transmission time of a synchronization resource, and configuration parameters of the synchronization resources on the at least two carriers are at least partially the same.

32. User equipment UE, comprising a processor, a memory, and a program or an instruction that is stored in the memory and that can be run on the processor, wherein the program or the instruction is executed by the processor to implement the steps of the synchronization resource configuration method according to any one according to claims 1 to 30.

33. A readable storage medium, wherein the readable storage medium stores a program or an instruction, and the program or the instruction is executed by a processor to implement the steps of the synchronization resource configuration method according to any one according to claims 1 to 30.

34. A computer program product, wherein the program product is executed by at least one processor to implement the synchronization resource configuration method according to any one according to claims 1 to 30.

35. User equipment LTE, wherein the LTE is configured to perform the synchronization resource configuration method according to any one according to claims 1 to 30.
